# EUROPEAN PATENT SPECIFICATION

(11) **EP 2 524 842 B1**
(45) Date of publication and mention of the grant of the patent: **07.05.2014**
(21) Application number: 11166326.6
(22) Date of filing: 17.05.2011
(51) Int. Cl.: B60R 19/56, B62D 25/02

(54) **Fixing device for a cladding plate**
Befestigungsvorrichtung für eine Verkleidungsplatte
Dispositif de fixation pour plaque de revêtement

(43) Date of publication of application: 21.11.2012
(73) Proprietor: Iveco Magirus AG, 89079 Ulm (DE)
(72) Inventor: Glass, Oliver, 89077 Ulm (DE)
(74) Representative: Cinquantini, Bruno

(56) References cited:
- EP-A1- 0 619 217
- GB-A- 330 889

## Description

### FIELD OF THE INVENTION

The present invention concerns a fixing device for a cladding plate on the undercarriage of a vehicle according to the preamble of claim 1.

### BACKGROUND

The undercarriages of heavy goods vehicles are frequently provided with lateral cladding plates between the axles. These claddings improve the appearance of the vehicle, but serve above all for safety purposes, as they provide underride protection. These lateral cladding plates are detachably suspended to ensure the vehicle undercarriage remains accessible for maintenance and repair purposes.

The plates are often attached by means of suspensions disposed in pairs, each pair comprising a top and bottom suspension. Whilst the cladding plate can be swung away from the vehicle by its lower edge at the bottom suspension, and, in the outwardly pivoted position, can be removed, the top suspension comprises a manual-release lock which secures the plate in the position in which it is pivoted against the vehicle. In the locked position, the cladding plate cannot be swung out and removed, nor can it be released by accident.

Frequently, the cladding plate is simply hooked into the bottom suspension whilst the top suspension comprises a ratchet system in which the upper edge of the plate engages. This system is relatively simple and inexpensive in its construction, and the cladding plate can be removed without complication.

Examples of pivoting-removable cladding plates are given in EP0619217, DE10319440, EP1026046, JP8028546, JP9030412, JP9030413 and GB330889, the latter discloses a fixing device for a cladding plate according to the preamble of claim 1.

The cladding plate my be flexible, for example due to its constructive material and/or due to its large dimensions. Therefore, any misalignment may lead to malfunction of the ratchet system.

Moreover, a disengagement of the top suspension may happens during the vehicle motion, and there is also the danger, that the hook on the bottom suspension can become detached, for example, in the event of strong vibrations.

### SUMMARY OF INVENTION

Hence the task of the invention is to improve the above-described prior art fixing devices in such a way that the cladding plate is held more securely, without rendering the removal of the plate more difficult.

This task is solved according to the invention by means of a fixing device with the features of claim 1.

According to the invention, the top suspension comprises an insert which is attached either to the undercarriage on the vehicle side, or to the cladding plate, plus a receiving element for the insert, which is attached to the other component as the case may be, i.e. to the cladding plate or the undercarriage. The insert can be pressed into the receiving element as the cladding plate is pivoted against the vehicle. Insert and receiving element comprise centring means, that complement each other in their design so that the insert, when pressed into the receiving element, is centred, and can be locked in the receiving element in the centred position.

A pressing-in direction is substantially tangential to the upper side of the cladding plate.

According to a preferred embodiment, the insert may be attached to the undercarriage and the receiving element may be attached to the cladding plate.

According to another preferred aspect of the invention, the receiving element comprises a spring-loaded lock cooperating with a respective seat on the insert and such centring means are able to keep together the insert and the receiving element for preventing the disengagement of the spring-loaded lock from its respective seat.

According to a preferred embodiment, the centring means comprise on the receiving element two sheet-metal tongues defining a V according to a front view of the internal side of cladding plate, symmetrically disposed with respect to the spring-loaded lock, and further comprise on the insert two sheet-metal tongues disposed parallel to the upper surfaces of the aforementioned two sheet-metal tongues. Therefore, such tongues of the insert are interposed, along said engaging direction of the spring-loaded lock with respect to its seat, between the tongues of the receiving element and the body of the receiving element. This avoids any movement along said engaging direction leading to their reciprocal disengagement.

According to an embodiment of the invention, the bottom suspension comprises a bearing, defining a longitudinal developing axis, parallel to the direction in which the vehicle travels, mounted on the vehicle side with a C-shaped cross-section with respect to said axis. Lying rotatably, according said axis, inside this bearing there is an axle with different cross-sections along said longitudinal axis of the axle. These cross-sections are dimensioned so that, in a first rotated position representing the position of the cladding plate when pivoted against the vehicle, the axle is held in place in the bearing and cannot therefore be released through the laterally open cross-section of the bearing. In a second rotated position representing the position of the cladding plate when swung away from the vehicle, the cross-section of the axle is small enough to pass through the free lateral opening of the bearing cross-section so that the cladding plate can be removed without problem.

The cladding plate is attached using the same sequence in reverse, starting by orienting the plate so that it can slide with its smaller cross-section into the C-shaped bearing from the side and it is then pivoted against the vehicle until the lock of the top suspension can be closed. In this rotated position, the axle is held securely in the bearing. The advantage of the construction according to the invention is that the cladding plate cannot accidentally become unhooked from the bottom suspension when the cladding plate is in the position where it is pivoted against the vehicle.

According to the second embodiment of the invention, the bottom suspension is a conventional hook/shaft coupling. According to an other aspect of the invention, a bottom suspension of the first embodiment my be coupled with a top suspension of the second embodiment in order to assure a higher safety level.

Further, at least some of the sheet-metal tongues can be provided with buffer elements.

These buffers may be made of rubber or an elastomer. According to a preferred embodiment, the sheet tongues are themselves elastically deformable, for example sheet-metal tongues, preferably with shape memory.

The insert of the top suspension and the bearing/axle of the bottom suspension are preferably connected by a rigid carrier and are formed as one piece with this latter.

The insert and the bearing/axle can thus be parts of a single component which is fixed on the vehicle side to a corresponding assembly element.

The attached claims form integral part of the present description.

### BRIEF DESCRIPTION OF THE FIGURES

A preferred example of an embodiment of the invention will be explained in more detail below with reference to the enclosed drawings, in which
- Fig. 1: is a perspective view from above into the undercarriage of a heavy goods vehicle fitted with an embodiment of the fixing device for a cladding plate according to the invention;
- Fig. 2: is a perspective view of the top suspension of the embodiment shown on Fig. 1;
- Fig. 3: is a perspective view from above into the undercarriage of a a second embodiment of the fixing device for a cladding plate in a partially detached state not forming part of the invention;
- Fig. 4: is an exploded view according to the embodiment on figure 3;
- Fig. 5 and 6: are side views of the bottom suspension of an embodiment of the invention according to two different positions of the cladding plate; Fig. 7 and 8 are perspective views of another embodiment of the bottom suspension of the fixing device according to the invention.

The same reference numerals and letters in the figures designate the same or functionally equivalent parts.

### DETAILED DESCRIPTION

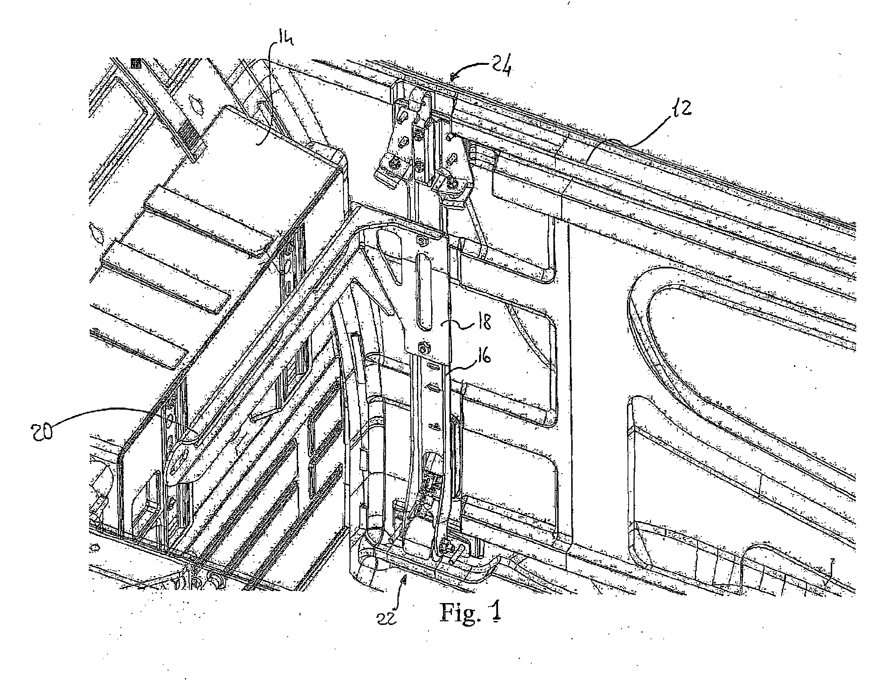

The fixing device 10 shown in Fig. 1 serves to fix a cladding plate 12 to the undercarriage 14 of a heavy goods vehicle, shown only partially in this Figure. Cladding plate 12 serves in particular as lateral cladding for an open space between a front and rear wheel axle of the heavy goods vehicle and functions as an underride protection to prevent other road users from penetrating this space in the event of an accident.

The fixing device 10 comprises a vertical rigid carrier 16, which is flanged at the side to a flange 18 of an assembly element 20, which forms part of undercarriage 14. In detail, this assembly element 20 is a horizontal carrier mounted transversely in undercarriage 14, having a flange 18 at its ends for receiving fixing device 10.

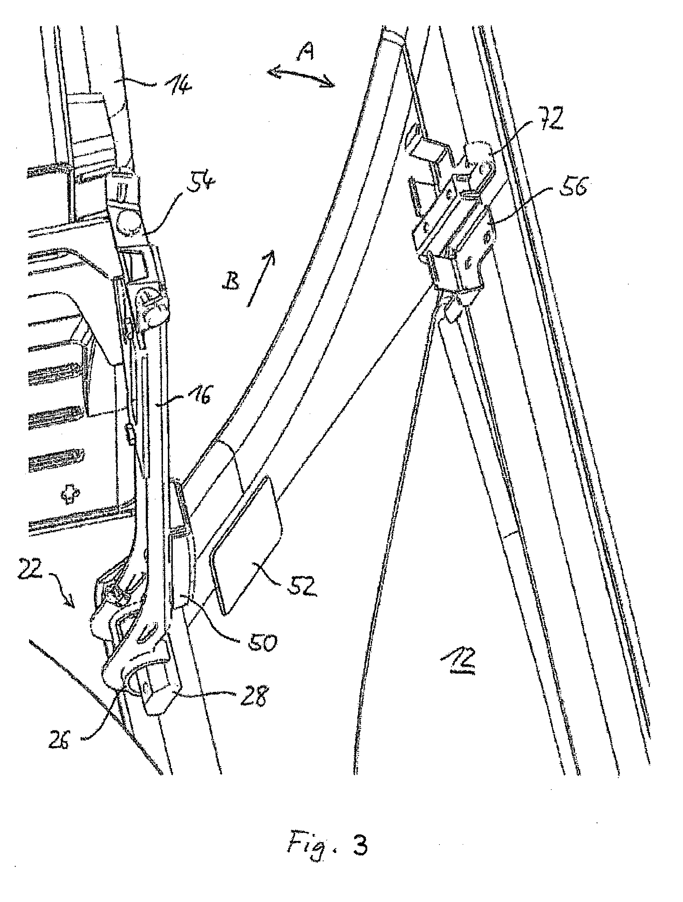

The fixing device 10 itself comprises a bottom suspension 22 and, preferably disposed directly above the latter, a top suspension 24 for releasable fixing cladding plate 12 to undercarriage 14. Bottom suspension 22 comprises a pivot mechanism to allow cladding plate 12 to be pivoted away from the vehicle, according to arrows A when the top suspension 24 is released. In the swung-away position shown in Fig. 3, cladding plate 12 can be removed from bottom suspension 22. Top suspension 24 comprises a manual-release lock which secures cladding plate 12 in the vertical position in which it is pivoted against undercarriage 14. As will be described in more detail in the following, this lock can be activated by pressing cladding plate 12 against the undercarriage.

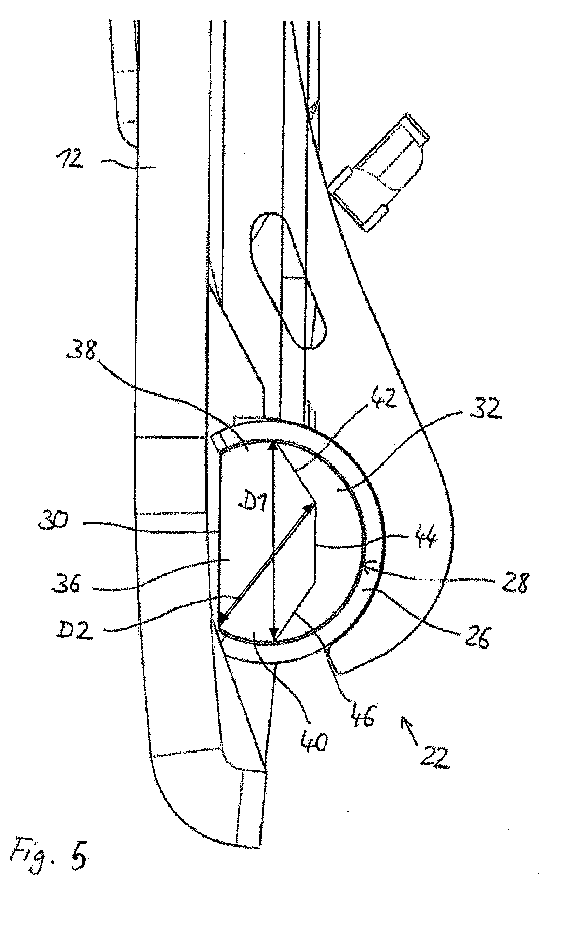

The top suspension 24 and bottom suspension 22 are rigidly attached to the ends of profile carrier 16 and are connected by the latter to undercarriage 14. Details of the structure of bottom suspension 22 will be described below with reference to Figures 5 - 8.

According to a first preferred embodiment, the bottom suspension 22 comprises a bearing 26, defining a longitudinal development axis X, and has a C-shaped cross-section with respect to said axis X disposed parallel to the direction of travel of the vehicle and perpendicular to the plane of cladding plate 12. This bearing means 26 forms a cylindrical surface, which is open on one side of the cylinder sleeve and at the ends of the cylinder. Therefore, this bearing means 26 are C-shaped cross-section with respect to said X axis, where the lateral opening is parallel to said X axis and faces cladding plate 12.

Lying rotatably inside bearing 26 there is an axle 28, which is attached to the lower portion of the inside of cladding plate 12, lying flush against this latter. For this purpose, axle 28 is provided on one side with a flat surface 30, which is flanged to cladding plate 12. Axle 28 is oriented according that said X axis which points in the direction of travel of the vehicle.

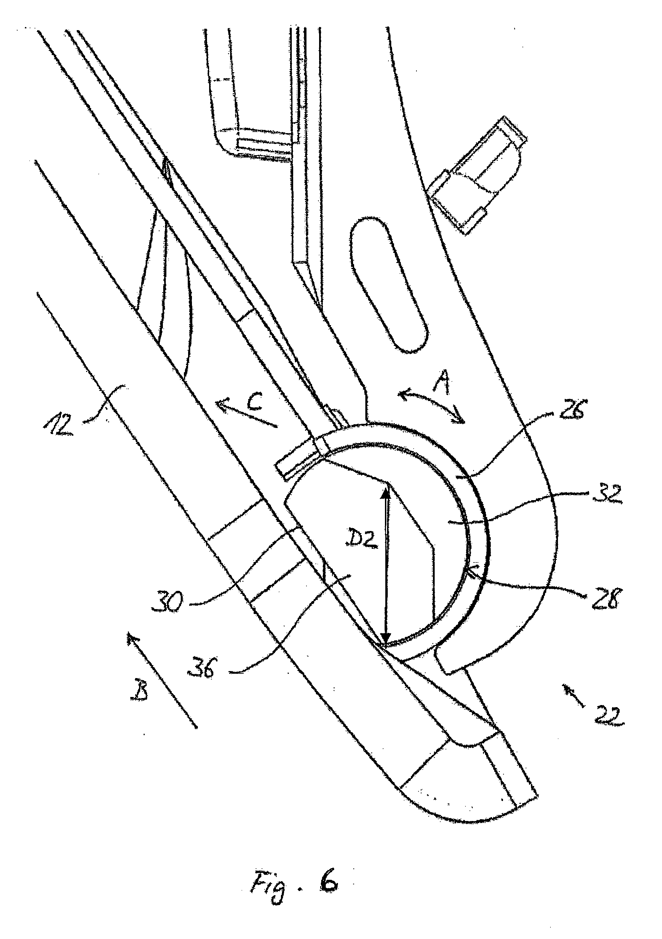

Axle 28 has a central portion 32, whose circumference on the non-flat side of axle 28 is adapted to the C-shaped cross-section of bearing 26, i.e. it is shaped on this side like a cylinder sleeve which slides inside bearing 26 as axle 28 rotates. This is shown particularly clearly by comparing the side views of Figures 5 and 6, which show different rotated positions of axle 28 in bearing 26 according to the arrows A. On both sides of this central portion 32 there are end sections 34, 36 of axle 28, with different cross-sections to that of the previously described central portion 32. On the side facing the cladding plate 12, these end sections 34, 36 have the flat surface 30 against which cladding plate 12 rests with its rear side, as well as adjoining circular curves at top and bottom 38, 40, whose outer surfaces are contrived to slide on the inside of bearing 26. On the side furthest removed from cladding plate 12, however, end sections 34, 36 are distanced from the inside of bearing 26 and spring back against the curve of central portion 32. In detail, the cross-section of the end sections of 34, 36 of axle 28 is, on the side furthest from cladding plate 12, formed by surfaces 42, 44, 46 which are angled in relation to each other, of which the upper and lower surfaces 42 and 46 adjoin curves 38,40. Overall, the cross-section of end sections 34, 36 can be described as similar to a hexagon, with the provision that the two cross-section sides 38 and 40 of this hexagon which adjoin flat surface 30, are slightly curved.

This shape of axle 28 means that in the direction parallel to flat surface 30, end sections 34, 36 of axle 28 have a longer cross-section than in any other diameter direction angularly offset in relation to this diameter direction. Whilst the direction of the largest diameter is designated by D1 in Fig. 5, a diameter direction with a shorter cross-section is designated at D2. Diameter D2 extends from a side edge of edge sections 34, 36 connecting rear-side flat surface 30 and the lower curved side 40, to an opposite edge for separating two flat sides 42, 44 on the side of end sections 34, 36 furthest from cladding plate 12. Diameter D1 of end sections 34, 36 coincides with the largest inner diameter of C-shaped bearing 26, but is larger than the free side opening of bearing 26 so that axle 28, in the position shown in Fig. 5, cannot be removed from bearing 26 from the side, i.e. perpendicular to diameter direction D1. If axle 28 is rotated inside bearing 26 so that the position shown in Fig. 6 is attained, end sections 34, 36 can pass, thanks to their smaller diameter D2, the free opening of bearing 26 in a direction angularly offset in relation to D1 and can be removed.

To ensure that in the position shown in Figures 3 and 5, central section 32 does not block the removal motion, bearing 26 is provided on the upper side of the C-shaped border with an opening 49 (see Fig. 3), disposed transversally with respect to the X axle. Therefore, the longitudinal opening of the bearing 26 and such opening 49 define together substantially an upside-down T. The curve of central section 32 can slide through this opening 49 during removal as in the situation in Fig. 5.

In Figure 3, a pivoting movement of cladding plate 12 around axle 28 is indicated by a double-headed arrow A. In the outwardly pivoted position shown in Fig. 3, cladding plate 12 can be removed in the direction of arrow B by removing axle 28 from bearing 26. The movement during removal is also shown in Fig. 6 by arrows B and C. It should also be mentioned that, attached to the side of profile carrier 16 facing cladding plate 12 there is a vehicle light 50, which, when cladding plate 12 is pivoted inwards, inserts itself into a corresponding opening 52, ensuring that it remains visible from the outside of the vehicle even when cladding plate 12 is in position. This light 50 is not important in relation to the present invention.

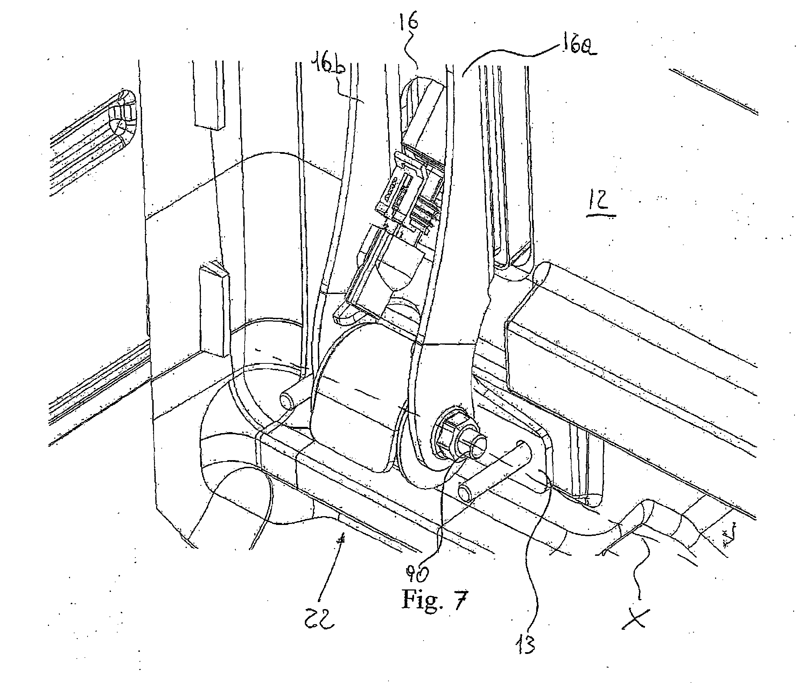

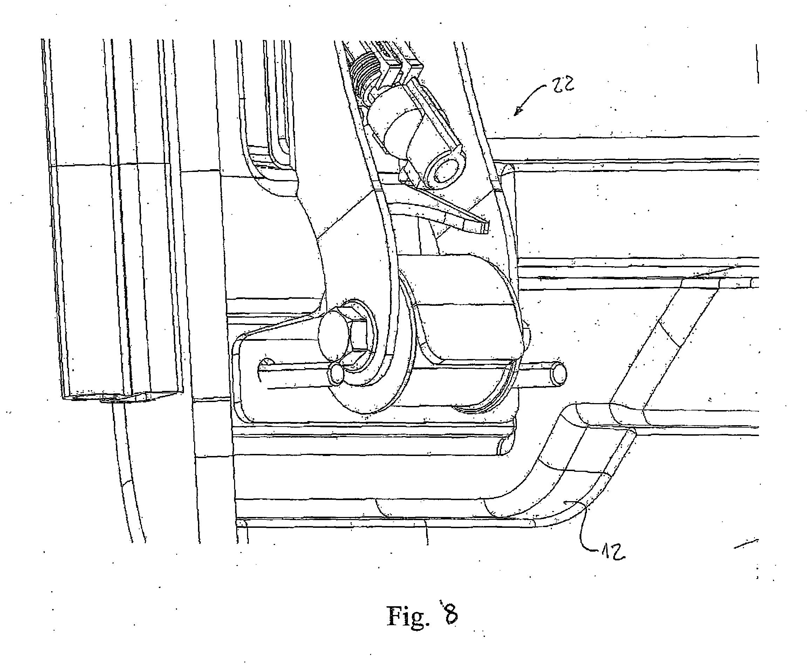

A second preferred embodiment of the structure of the bottom suspension 22 will be described below with reference to Figures 7 and 8. The common components between the two embodiments are signed with unchanged reference signs.

The profile carrier 16, in his bottom portion comprises a couple of wings 16a and 16b, disposed perpendicularly with respect to the cladding plate 12 and also perpendicularly with respect to the X axis, which points in the direction defined by the vehicle travelling, when the plate is assembled to the vehicle.

Such wings 16a and 16b comprise supporting shaft 90 disposed parallel to the cladding plate and to the X axis, preferably, cylindrical-shaped and covered with an elastomeric coating.

Correspondently, the cladding plate 12 has, in a lower portion of the inside thereof, a hook 13, flanged to the cladding plate by means his flat portion.

When the cladding plate is connected to the vehicle, the hook is inserted between said wings and leant against the supporting shaft 90. The hook has, also with respect to said X axis a C-shaped cross-section, so as the plate can rotate on the supporting shaft 90.

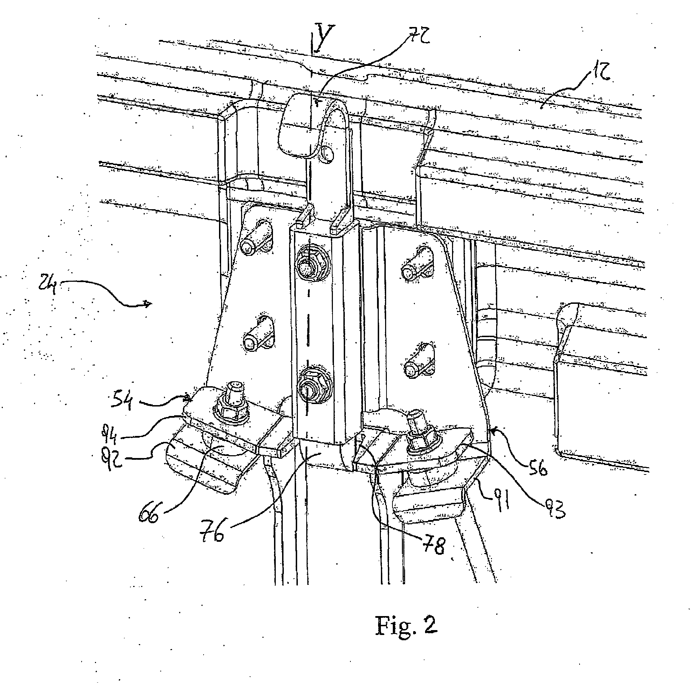

Preferably, the internal width of the hook 13 is dimensioned so as the plate, when in closed position, does not vibrate. According to a first embodiment of the present invention, as can been seen in particular in Figure 2, the top suspension 24 comprises an insert 54 mounted at the top end of profile carrier 16, which is intended to be inserted into the receiving element 56 mounted on cladding plate 12.

When the cladding plate is in closed position, the receiving element 56 is disposed over the top end of the profile carrier 16, so as a portion of the insert element fits in the receiving element, frontally, i.e. according to the closing rotation of the cladding plate.

Insert 54 and receiving element 56 complement each other in their design so that insert 54, when pressed against receiving element 56, is centred in the latter and can be locked in this centred position.

The receiving element 56 itself is formed by an angled sheet-metal element, whilst insert 54 is formed on the top end of profile carrier 16. The positions of insert 54 and receiving element 56 on assembly element 20 or on cladding plate 12 can be exchanged so that receiving element 56 may also be contrived on the top end of profile carrier 16, whilst insert 54 is attached to the inside of cladding plate 12.

Receiving element 56 carries, in a central position, a, spring-loaded lock 72, which can be manually pulled vertically upwards by a hook 74 so that the bottom end 76 of the spring-loaded lock 72 can be pulled upwards.

Therefore, reversible lock 72, on the receiving element 56 cooperates with the respective seat 78, on the insert 54, defining an engaging direction Y, which is substantially vertical, i.e. radial with respect to the cladding plate pivoting.

In the pulled-up position, receiving element 56, together with the top part of cladding plate 12, can be pivoted away from insert 54. Conversely, when cladding plate 12 is pressed against profile carrier 16 as insert 54 moves into receiving element 56, the bottom end 76 of the spring-loaded lock 72 slides over a pawl 78, see figure 2, disposed on the top end of profile carrier 16. Spring-loaded lock 72 then engages behind pawl 78, thereby securing the position of insert 54 in receiving element 56. Cladding plate 12 can therefore be released by simply acting on spring-loaded lock 72 and subsequent pivoting away and removal.

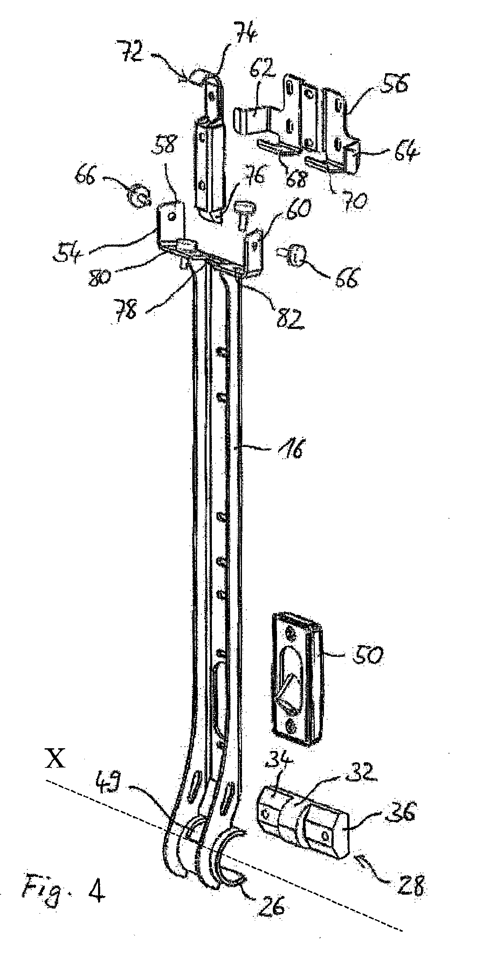

According to an embodiment not forming part of the invention, according to figures 3 - 4, the insert 54 is formed from two horizontally distanced sheet-metal tongues 58, 60 which project upwards, substantially perpendicularly with respect to the X axis and the cladding plate, at the top end of profile carrier 16 and are slightly inclined in relation to each other towards the reciprocal approaching movement of the insert 54 and receiving element according to arrows A, so that sheet-metal tongues 58, 60 converge in the pressing-in direction, i.e. in the direction of receiving element 56. Receiving element 56 comprises two complementarily disposed sheet-metal tongues 62, 64 which extend from cladding plate 12 and point towards insert 54. Sheet-metal tongues 62, 64 of receiving element 56 diverge slightly contrary to the direction in which insert 54 is inserted into receiving element 56. When cladding plate 12 is pressed into closing position, sheet-metal tongues 58, 60 of insert 54 rests against sheet-metal tongues 62, 64 of receiving element 56, and insert 54 is automatically centred in receiving element 56 due to the inclined position of tongues 58, 60, 62, 64. Advantageously, if, for example, the position of insert 54 deviates slightly to the right in relation to the centred position in receiving element 56, in which the bottom end 76 of the spring-loaded lock 72 slides over the pawl 78, between surface areas 80, 82 for accommodating tongues 68, 70, the right tongue 60 of insert 54 slides inwards along the corresponding tongue 64- of receiving element 56 until the centred position is achieved. The same is true if there is any deviation to the left in the position of insert 54 in relation to the centred position; in this case, tongue 58 slides along tongue 62 into the centred position.

To improve the fit of insert 54 in receiving element 56, rubber buffers 66 are disposed on the outside of sheet-metal tongues 58, 60. Sheet-metal tongues 58,60,62,64 may be slightly elastic to ensure a play-free fit.

According to a main aspect of the present invention, receiving element 56 further comprises more sheet-metal tongues 68, 70, preferably on its bottom edge which is essentially horizontal, but inclined slightly upwards relative to the horizontal plane. These sheet-metal tongues 68, 70, which may be disposed between or externally the above-described sheet-metal tongues 62, 64, are intended to run onto corresponding surface areas 80, 82 of the insert 56, which are also positioned at a slight angle and provided on their top surface with buffer elements 66. When cladding plate 12 is pressed into position, tongues 68, 70 slide onto surface areas 80, 82 so that a fixed and play-free fit of cladding plate 12 is achieved in relation to the position of suspensions 22 and 24. Corresponding tongues may be provided on insert 54 instead of surface areas 80 and 82.

According to the invention the top suspension 24 comprises a receiving element 56 having two horizontally spaced tongues 91 and 92, symmetrically disposed with respect to the spring-loaded lock 72. Such tongues 91, 92 are substantially horizontal and perpendicular to the cladding plate 12. In detail, such tongues are slightly downwards inclined towards the spring-loaded lock 72, in a V fashion. The top of the carrier 16 comprises two corresponding tongues 93, 94 disposed so as they are parallel to the upper surfaces of the tongues 91, 92. Rubber buffers 66 are disposed between the corresponding tongues 92/94 and 91/93.

The tongues act as guidance so that insert 54 and receiving element 56 are reciprocally centred and the bottom end 76 of the spring-loaded lock 72 can engage the pawl 78. In fact, the resultants of the reaction forces exchanged between the tongues of the embodiment not forming part of the invention coincide with the reaction forces developed by said two couple of tongues 92/94 and 91/93 of the invention. The substantially horizontal tongues 93 and 94 of insert 54 are on the respective tongues 91 and 94 of receiving element 56. In other words, the tongues 91 and 92 of receiving element 56 are comprised between the tongues 93, 94 of the insert 54 and the body of the insert 54. It means that such couples of tongues cooperate in order to avoid the disengagement of the receiving element 56 from the insert 54, and hence the disengagement of the bottom end 76 of the spring-loaded lock 72 from the pawl 78. Therefore, such tongues prevent any vertical removal of receiving element 56 from the insert 54. When the bottom suspension is according the present invention, the hinge formed by the supporting axle 90 and the hook 13 is not able to prevent a vertical disengagement of the cladding plate from the vehicle.

Therefore the tongues 91, 92, 93, 94 are perpendicular to the engaging direction Y.

The bottom suspension 22 according to its first embodiment prevents a vertical disengagement of the cladding plate from the vehicle, therefore such second embodiment of the top suspension is not strictly necessary, however this combination assures a high level of safety against the disengagement of the cladding plate from the vehicle. According to a further object of the present invention, the features of the top suspension may be combined, for example by adding vertical tongues 62/58 and 60/64 to the top suspension.

## Claims

1. Fixing device (10) for a cladding plate (12) on the undercarriage (14) of a vehicle, especially a heavy goods vehicle, with a bottom suspension (22) and, disposed above the latter, a top suspension (24) for releasable attaching cladding plate (12) to undercarriage (14), said cladding plate (12) being pivotable according to a fit-in/fit-out rotation (A), by the lower suspension (22), the cladding plate pivoting till a pivoted-away position, wherein the cladding plate is decouplable by the lower suspension (22), and whose top suspension (24) comprises a reversible lock (72) cooperating with a respective seat (78) along an engaging direction (Y), the top suspension (24) comprising
- an insert (54) comprising such seat (78) and attached to the undercarriage (14) or cladding plate (12),
- a receiving element (56) comprising said reversible lock (72) and attached to cladding plate (12) or undercarriage (14),
the insert (54) fitting into the receiving element (56), **characterised in that** insert (54) and receiving element (56) comprise centering means ((92,94), (91,93)) having at least
- first sheet tongues (93,94) connected to the insert (54) and disposed substantially perpendicular to said engaging direction (Y),
- second sheet tongues (91,92) connected to the receiving element (56) so as to be parallel and complementary to said first sheet tongues, when the insert (54) fits the receiving element (56),
said first and second tongues cooperating between each other, so as to guide said reciprocal fitting of the insert and receiving element
and **in that** said first tongues (93,94) are interposed, along said engaging direction (Y), between said second tongues (91,92) and the body of the receiving element (56) so as to avoid any movement along said engaging direction (Y) leading to their reciprocal disengagement.

2. The fixing device according to claim 1, **characterised in that** said first and second tongues are symmetrically disposed with respect to said reversible lock (72).

3. The fixing device according to claim 2, **characterised in that** said first and second tongues are slightly downwards inclined towards the reversible lock (72), in a V fashion.

4. The fixing device according to claim 1, **characterised in that**
- receiving element (56) comprises two third sheet tongues (62, 64) substantially vertically disposed and outwardly oriented, which diverge against the fit-in direction (A), and **in that**
- insert (54) comprises two fourth metal tongues (58, 60) complementary to said third tongues, by converging in the fit-in direction (A), for resting against said third sheet tongues (62, 64) of receiving element (56), when the insert (54) fits the receiving element (56).

5. The fixing device according to any of the preceding claims, **characterised in that** insert (54) is attached to undercarriage (14) and receiving element (56) is attached to cladding plate (12).

6. The fixing device according to any of the preceding claims, **characterised in that** at least one of sheet tongues (91, 92, 93, 94) is provided with elastic buffer elements (66).

7. fixing device according to any of the preceding claims, **characterised in that** sheet tongues ( 91, 92, 93, 94) are made of elastic material.

8. The fixing device according to any of the preceding claims, **characterised in that** said first and second, and said third and second tongues define a play-free coupling.

9. The fixing device according to any of the preceding claims, **characterised in that** the reversible lock (72) comprise a manual spring-loaded lock.

10. The fixing device according to any of the preceding claims, **characterised in that** said lower suspension (22) comprises
- a bearing (26), defining a longitudinal development axis (X), attached to undercarriage (14) and having a C-shaped cross-section according to said longitudinal axis (X) and
- an axle (28) lying rotatably in bearing (26), said axle having different cross-sections (D1, D2) along said longitudinal axis (X), in such a way the axle (28) is retained in bearing (26) in a first rotated position, and can be removed from bearing (26) at the side in said pivoted-away position.

11. The fixing device according to any of the preceding claims, **characterised in that** said lower suspension (22) comprises
- a supporting shaft (90) connected to the vehicle and parallel to cladding plate, when it is on-vehicle mounted,
- a hook (13) flanged to the cladding plate (12) by means of flat portion thereof.

12. The fixing device according to any of the preceding claims, **characterised in that** the insert (54) of the top suspension (24) and the bearing (26) or the supporting shaft (90) of the bottom suspension (22) are connected by a rigid carrier (16) and are formed as one piece with this latter.

## Patentansprüche

1. Vorrichtung (10) zum Befestigen einer Verkleidungs-Platte (12) an der Bodengruppe (14) eines Fahrzeugs, speziell eines Fahrzeugs für schwere Güter, mit einer unteren Aufhängung (22) und - über der letzteren angeordnet - einer oberen Aufhängung (24) zum lösbaren Befestigen einer Verkleidungs-Platte (12) an der Bodengruppe (14), wobei die Verkleidungs-Platte (12) entsprechend einer Fit-in-/Fit-out-Drehung (A) um die weiter unten angeordnete Aushängung (22) drehbar ist, wobei sich die Verkleidungs-Platte (12) bis zu einer weggedrehten Position dreht, in der die Verkleidungs-Platte durch die untere Aufhängung abkoppelbar ist, und deren obere Aufhängung (24) einen reversiblen Verschluss (72) umfasst, der mit einer jeweiligen Aufnahme (78) entlang einer Eingriffs-Richtung (Y) zusammenwirkt, wobei die obere Aufhängung (24) umfasst:
- einen Einsatz (54), der eine derartige Aufnahme (78) umfasst und an der Bodengruppe (14) oder der Verkleidungs-Platte (12) befestigt ist;
- ein Aufnahme-Element (56), das den reversiblen Verschluss (72) umfasst und an der Verkleidungs-Platte (12) oder der Bodengruppe (14) befestigt ist;
- wobei der Einsatz (54) in das Aufnahme-Element (56) passt;
- **dadurch gekennzeichnet, dass** Einsatz (54) und Aufnahme-Element (56) Zentrierungs-Mittel (92, 94), (91, 93) umfassen, die aufweisen wenigstens
- erste Blech-Zungen (93, 94), die mit dem Einsatz (54) verbunden sind und im Wesentlichen senkrecht zu der Eingriffs-Richtung (Y) angeordnet sind;
- zweite Blech-Zungen (91, 92), die mit dem Aufnahme-Element (56) verbunden sind, so dass sie parallel und komplementär zu den ersten Blech-Zungen sind, wenn der Einsatz (54) in das Aufnahme-Element (56) eingepasst wird;
- wobei die ersten und zweiten Zungen miteinander zusammenwirken und so das gegenseitige Einpassen des Einsatzes und des Aufnahme-Elements leiten;
- und dadurch, dass die ersten Zungen (93, 94) entlang der Eingriffs-Richtung (Y) zwischen den zweiten Zungen (91, 92) und dem Körper des Aufnahme-Elements (56) angeordnet sind und so jede Bewegung entlang der Eingriffs-Richtung (Y), die zu ihrem gegenseitigen Ausrücken führt, vermeiden.

2. Befestigungs-Vorrichtung nach Anspruch 1, **dadurch gekennzeichnet, dass** die ersten und zweiten Zungen im Hinblick auf den reversiblen Verschluss (72) symmetrisch angeordnet sind.

3. Befestigungs-Vorrichtung nach Anspruch 2, **dadurch gekennzeichnet, dass** die ersten und zweiten Zungen leicht nach unten auf den reversiblen Verschluss (72) zu nach Art eines "V" geneigt sind.

4. Befestigungs-Vorrichtung nach Anspruch 1, **dadurch gekennzeichnet, dass**
- das Aufnahme-Element (56) zwei dritte Blech-Zungen (62, 64) umfasst, die im Wesentlichen vertikal angeordnet sind und nach außen orientiert sind, die entgegen der Einpass-Richtung (A) auseinanderlaufen, und dadurch, dass
- der Einsatz (54) zwei vierte Metall-Zungen (58, 60) umfasst, die komplementär zu den dritten Zungen sind, indem sie in der Einpass-Richtung (A) auseinanderlaufen, zum Ruhen gegen die dritten Blech-Zungen (62, 64) des Aufnahme-Elements (56), wenn der Einsatz (54) in das Aufnahme-Element (56) eingepasst ist.

5. Befestigungs-Vorrichtung nach irgendeinem der vorangehenden Ansprüche, **dadurch gekennzeichnet, dass** der Einsatz (54) an der Bodengruppe (14) befestigt ist und das Aufnahme-Element (56) an der Verkleidungs-Platte (12) befestigt ist.

6. Befestigungs-Vorrichtung nach irgendeinem der vorangehenden Ansprüche, **dadurch gekennzeichnet, dass** wenigstens eine der Blech-Zungen (91, 92, 93, 94) mit elastischen Dämpfer-Elementen (66) versehen ist.

7. Befestigungs-Vorrichtung nach irgendeinem der vorangehenden Ansprüche, **dadurch gekennzeichnet, dass** die Blech-Zungen (91, 92, 93, 94) aus einem elastischen Material hergestellt sind.

8. Befestigungs-Vorrichtung nach irgendeinem der vorangehenden Ansprüche, **dadurch gekennzeichnet, dass** die ersten und zweiten Zungen und die dritten und zweiten Zungen einen von Spiel freien Anschluss definieren.

9. Befestigungs-Vorrichtung nach irgendeinem der vorangehenden Ansprüche, **dadurch gekennzeichnet, dass** der reversible Verschluss (72) einen manuellen feder-gespannten Verschluss umfasst.

10. Befestigungs-Vorrichtung nach irgendeinem der vorangehenden Ansprüche, **dadurch gekennzeichnet, dass** die weiter unten angeordnete Aufhängung (22) umfasst:
- ein Lager (26), das eine Längs-Entwicklungs-Achse (X) definiert, die an der Bodengruppe (14) befestigt ist und einen C-förmigen Querschnitt entsprechend der Längsachse (X) aufweist; und
- eine Achse (28), die drehbar in dem Lager (26) liegt, wobei die Achse unterschiedliche Querschnitte (D1, D2) entlang der Längsachse (X) in einer solchen Weise aufweist, dass die Achse (28) in dem Lager in einer ersten rotierten Position gehalten ist und aus dem Lager (26) an der Seite in der weggedrehten Position entfernt werden kann.

11. Befestigungs-Vorrichtung nach irgendeinem der vorangehenden Ansprüche, **dadurch gekennzeichnet, dass** die weiter unten angeordnete Aufhängung (22) umfasst:
- einen Stütz-Schaft (90), der mit dem Fahrzeug verbunden ist und parallel zu der Verkleidungs-Platte ist, wenn er an dem Fahrzeug montiert ist;
- einen an der Verkleidungs-Platte (12) mittels seines flachen Teils davon angeflanschten Haken (13) .

12. Befestigungs-Vorrichtung nach irgendeinem der vorangehenden Ansprüche, **dadurch gekennzeichnet, dass** der Einsatz (54) der oberen Aufhängung (24) und das Lager (26) oder der Stütz-Schaft (90) der weiter unten angeordneten Aufhängung (22) verbunden sind über einen starren Träger (16) und als ein Stück mit diesem geformt sind.

## Revendications

1. Dispositif de fixation (10) pour une plaque de revêtement (12) sur le train roulant (14) d'un véhicule, en particulier un poids lourd, avec une suspension inférieure (22) et disposée au-dessus de cette dernière, une suspension supérieure (24) pour fixer de manière amovible la plaque de revêtement (12) sur le train roulant (14), ladite plaque de revêtement (12) pouvant pivoter selon une rotation d'insertion / d'installation (A), par la suspension inférieure (22), la plaque de revêtement pivotant jusqu'à une position pivotée à distance, dans lequel la plaque de revêtement peut se découpler grâce à la suspension inférieure (22), et dont la suspension supérieure (24) comprend un verrouillage réversible (72) coopérant avec un siège (78) respectif le long d'une direction de mise en prise (Y), la suspension supérieure (24) comprenant :
un insert (54) comprenant un tel siège (78) et étant fixé au train roulant (14) ou à la plaque de revêtement (12),
un élément de réception (56) comprenant ledit verrouillable réversible (72) et étant fixé à la plaque de revêtement (12) ou au train roulant (14),
l'insert (54) s'insérant dans l'élément de réception (56),
**caractérisé en ce que** l'insert (54) et l'élément de réception (56) comprennent des moyens de centrage (92, 94), (91, 93) ayant au moins:
des premières languettes en feuille (93, 94) raccordées à l'insert (54) et disposées sensiblement perpendiculairement à ladite direction de mise en prise (Y),
desdeuxièmes languettesen feuille (91, 92) raccordées à l'élément de réception (56) afin d'être parallèles et complémentaires desdites premières languettes en feuille, lorsque l'insert (54) se monte sur l'élément de réception (56),
lesdites première et seconde languettes coopérant entre elles, afin de guider ledit ajustement réciproque de l'insert et de l'élément de réception,
et **en ce que** lesdites premières languettes (93, 94) sont intercalées, le long de ladite direction de mise en prise (Y), entre lesdites deuxièmes languettes (91, 92) et le corps de l'élément de réception (56) afin d'éviter tout mouvement le long de ladite direction de mise en prise (Y) menant à leur dégagement réciproque.

2. Dispositif de fixation selon la revendication 1, **caractérisé en ce que** lesdites premières et deuxièmes languettes sont disposées symétriquement par rapport audit verrouillage réversible (72).

3. Dispositif de fixation selon la revendication 2, **caractérisé en ce que** lesdites premières et deuxièmes languettes sont légèrement inclinées vers le bas vers le verrouillage réversible (72), à la manière d'un V.

4. Dispositif de fixation selon la revendication 1, **caractérisé en ce que**:
l'élément de réception (56) comprend deux troisièmes languettes en feuille (62, 64) disposées sensiblement verticalement et orientées vers l'extérieur, qui divergent contre la direction d'insertion (A), et **en ce que**:
l'insert (54) comprend deux quatrièmes languettes métalliques (58, 60) complémentaires desdites troisièmes languettes, convergeant ainsi dans la direction d'insertion (A) pour s'appuyer contre lesdites troisièmes languettes en feuille (62, 64) de l'élément de réception (56), lorsque l'insert (54) est monté sur l'élément de réception (56).

5. Dispositif de fixation selon l'une quelconque des revendications précédentes, **caractérisé en ce que** l'insert (54) est fixé sur le train roulant (14) et l'élément de réception (56) est fixé sur la plaque de revêtement (12).

6. Dispositif de fixation selon l'une quelconque des revendications précédentes, **caractérisé en ce qu'**au moins l'une des languettes en feuille (91, 92, 93, 94) est prévue avec des éléments tampons élastiques (66).

7. Dispositif de fixation selon l'une quelconque des revendications précédentes, **caractérisé en ce que** les languettes en feuille (91, 92, 93, 94) sont réalisés avec un matériau élastique.

8. Dispositif de fixation selon l'une quelconque des revendications précédentes, **caractérisé en ce que** lesdites premières et deuxièmes, et lesdites troisièmes et quatrièmes languettes définissent un couplage sans jeu.

9. Dispositif de fixation selon l'une quelconque des revendications précédentes, **caractérisé en ce que** le verrouillage réversible (72) comprend un verrouillage à ressort manuel.

10. Dispositif de fixation selon l'une quelconque des revendications précédentes, **caractérisé en ce que** ladite suspension inférieure (22) comprend:
un palier (26) définissant un axe de développement longitudinal (X), fixé sur le train roulant (14) et ayant une section transversale en forme de C selon ledit axe longitudinal (X), et
un essieu (28) en rotation dans le palier (26), ledit essieu ayant différentes sections transversales (D1, D2) le long dudit axe longitudinal (X), de sorte que l'essieu (28) est retenu dans le palier (26) dans une première position entraînée en rotation, et peut être retiré du palier (26) sur un côté dans ladite position pivotée à distance.

11. Dispositif de fixation selon l'une quelconque des revendications précédentes, **caractérisé en ce que** ladite suspension inférieure (22) comprend:
un arbre de support (90) raccordé au véhicule et parallèle à la plaque de revêtement, lorsqu'il est monté sur le véhicule,
un crochet (13) fixé par bride à la plaque de revêtement (12) au moyen de sa partie plate.

12. Dispositif de fixation selon l'une quelconque des revendications précédentes, **caractérisé en ce que** l'insert (54) de la suspension supérieure (24) et le palier (26) ou l'arbre de support (90) de la suspension inférieure (22) sont raccordés par un support rigide (16) et sont formés d'un seul tenant avec ce dernier.
